# FASCICULE DE BREVET EUROPEEN

(11) **EP 2 533 991 B1**
(45) Date de publication et mention de la délivrance du brevet: **15.07.2015**
(21) Numéro de dépôt: 11706868.4
(22) Date de dépôt: 24.01.2011
(51) Int. Cl.: B60D 1/48, B60D 1/06, B60D 1/52

(54) **DISPOSITIF D'ATTELAGE POUR VEHICULE AUTOMOBILE ET VEHICULE EQUIPE D'UN TEL DISPOSITIF D'ATTELAGE**
KRAFTFAHRZEUGZUGVORRICHTUNG UND MIT SOLCH EINER ZUGVORRICHTUNG AUSGESTATTETES FAHRZEUG
MOTOR VEHICLE HITCH DEVICE AND VEHICLE EQUIPPED WITH SUCH A HITCH DEVICE

(30) Priorité: 09.02.2010 FR 1050878
(43) Date de publication de la demande: 19.12.2012
(73) Titulaire: PSA Peugeot Citroen Automobiles S.A., 78140 Velizy Villacoublay (FR)
(72) Inventeur: MAINGRET, Denis, 70300 Brotte les Luxeuil (FR); VARLOT, Damien, F-90500 Beaucourt (FR)
(74) Mandataire: Fernandez, Francis Lionel
(86) Numéro de dépôt international: PCT/FR2011/050135
(87) Numéro de publication internationale: WO 2011/098700

(56) Documents cités:
- EP-A1- 0 069 231
- EP-A1- 0 093 795
- DE-U1-202007 015 026
- US-B1- 6 742 799

## Description

La présente invention concerne un dispositif d'attelage pour véhicule automobile.

L'invention concerne également un véhicule automobile équipé d'un tel dispositif d'attelage.

Le brevet EP 0 430 665 décrit un dispositif d'attelage comprenant une traverse dont les extrémités opposées comportent chacune des moyens de fixation destinés à être fixés à la partie inférieure de la face arrière de la caisse du véhicule, un bras portant la rotule du dispositif d'attelage, l'extrémité de ce bras opposée à la rotule étant reliée par des moyens de liaison à un support qui est fixé au milieu de la traverse. Document DE 20 2007 015 026 U1 montre le préambule de la revendication 1.

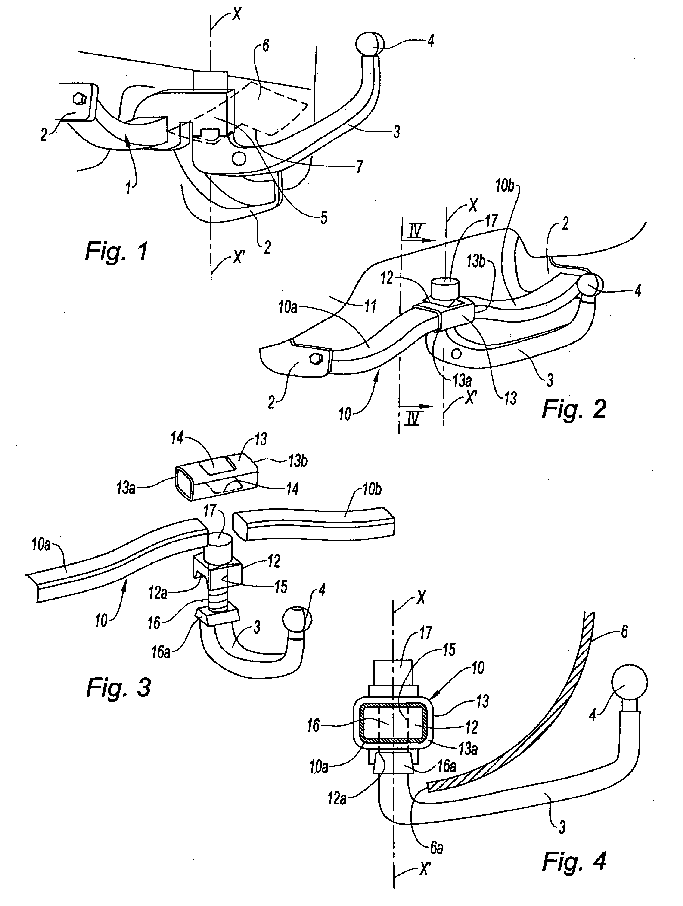

Un dispositif d'attelage de ce type est également représenté sur la figure 1.

Cette figure montre en perspective la traverse 1 dont les extrémités opposées comportent des moyens de fixation 2 fixés à la caisse d'un véhicule automobile et un bras 3 portant la rotule d'attelage 4.

L'extrémité du bras 3 opposée à la rotule 4 est reliée par des moyens de liaison à un support 5 qui est fixé au milieu de la traverse 1.

Les moyens de liaison entre le bras 3 et le support 5 permettent de démonter et de monter le bras 3, sans outil, suivant un axe X-X' sensiblement vertical.

Cet axe X-X' est décalé vers l'arrière de la traverse 1.

Le support 5 encombre la zone arrière de la traverse 1, de sorte que pour pouvoir monter le dispositif d'attelage, on est obligé de réaliser dans le pare-choc 6, une découpe 7 située en regard de l'emplacement du support 5 destiné à recevoir le bras 3.

Cette découpe 7 augmente la durée du montage du dispositif d'attelage et affecte l'aspect esthétique du pare-choc.

Le but de la présente invention est de remédier à cet inconvénient.

Ce but est atteint, selon la revendication 1 de l'invention.

Le fait d'intégrer le support du bras portant la rotule dans la zone du milieu de la traverse permet de monter et démonter le bras suivant un axe qui n'est plus situé à l'axe de la traverse, mais situé au droit du milieu de cette dernière.

Ainsi, le support n'encombre plus l'espace situé à l'arrière de la traverse et la découpe du pare-choc n'est plus nécessaire pour monter le dispositif d'attelage.

Selon l'invention, la traverse est constituée par deux demi-traverses, ledit support étant fixé entre ces deux demi-traverses.

Selon l'invention, ledit support est fixé dans un manchon de telle sorte que ledit axe de montage et démontage du bras portant la rotule soit perpendiculaire à l'axe dudit manchon, chacune des deux extrémités opposées de ce manchon étant liée axialement à l'une des deux demi-traverses.

Ainsi, ce manchon assure la continuité mécanique de la liaison entre les deux demi-traverses, tout en permettant d'intégrer le support entre ces demi-traverses et de placer l'axe de montage et démontage du bras entre ces deux demi-traverses.

Dans un mode de réalisation avantageux de l'invention, l'extrémité de chacune des deux demi-traverses est engagée axialement dans l'une des extrémités dudit manchon et est soudée à cette dernière.

On obtient ainsi une liaison mécanique particulièrement rigide entre les deux demi-traverses.

La section transversale des deux demi-traverses peut être inférieure à celle de la traverse d'une seule pièce du dispositif d'attelage connu, ce qui permet d'alléger la masse de l'ensemble du dispositif.

Selon l'invention, ledit support est engagé dans deux ouvertures réalisées sur deux parois latérales opposées du manchon, ce qui permet de rendre le support solidaire du manchon.

Dans un mode de réalisation particulièrement avantageux de l'invention, le support est constitué par un bloc de forme générale parallélépipédique, les deux ouvertures du manchon présentant une forme rectangulaire correspondant à la section transversale dudit bloc de façon à verrouiller ce dernier par rapport au manchon.

Avantageusement, le support comporte un évidement intérieur dans lequel est engagé de façon amovible un embout solidaire de l'extrémité du bras opposée à celle portant la rotule.

De préférence, l'axe dudit évidement est centré sur le milieu de chacune desdites ouvertures.

Selon un autre aspect, l'invention concerne également un véhicule automobile équipé d'un dispositif d'attelage selon l'invention.

De préférence, le bras portant la rotule du dispositif d'attelage s'étend sous le pare-choc arrière, la traverse du dispositif d'attelage s'étendant à proximité du bord inférieur du pare-choc et ce bord inférieur étant dépourvu de découpe.

D'autres particularités et avantages de l'invention apparaîtront encore tout au long de la description ci-après.

Aux dessins annexés, donnés à titre d'exemples, non limitatifs :
- la figure 2 est une vue en perspective d'un dispositif d'attelage selon l'invention fixé à l'arrière d'un véhicule automobile,
- la figure 3 est une vue en perspective éclatée du dispositif d'attelage selon l'invention,
- la figure 4 est une vue en coupe à échelle agrandie suivant le plan IV-IV de la figure 2.

Le dispositif d'attelage représenté sur la figure 2 comprend une traverse 10 dont les extrémités opposées comportent chacune un organe de fixation 2 fixé à la partie inférieure 11 de la face arrière d'un véhicule automobile.

Le dispositif d'attelage comprend, en outre, un bras coudé 3 portant une rotule 4.

L'extrémité de ce bras 3 opposée à la rotule 4 est reliée à un support 12 qui est fixé au milieu de la traverse 10.

L'extrémité ci-dessus du bras 3 est liée au support 12 par des moyens de liaison qui seront décrits plus loin, qui permettent de monter et démonter le bras 3 par rapport au support 12 suivant un axe X-X' sensiblement vertical.

Le dispositif d'attelage représenté sur les figures 2 et 4 diffère de celui de la figure 1 par le fait que le support 12 est intégré dans la zone du milieu de la traverse 10 et les moyens de liaison évoqués ci-dessus sont agencés de telle sorte que l'axe X-X' soit situé dans cette zone du milieu de la traverse 10.

Autrement dit, l'axe X-X' traverse la zone du milieu de la traverse 10.

Comme montré par la figure 3, la traverse 10 est constituée par deux demi-traverse 10a, 10b et le support 12 est fixé entre ces deux demi-traverses 10a, 10b.

Par ailleurs, les figures 2 et 4 montrent que le support 12 est fixé dans un manchon 13 de telle sorte que l'axe X-X' de montage et démontage du bras 3 portant la rotule 4 soit perpendiculaire à l'axe du manchon 13, chacune des deux extrémités opposées 13a, 13b de ce manchon 13 étant liée axialement à l'une des deux demi-traverses 10a, 10b.

Dans l'exemple représenté, l'extrémité de chacune des deux demi-traverses 10a, 10b est engagée axialement dans l'une des extrémités 13a, 13b du manchon 13 et est soudée à cette dernière.

Par ailleurs, le support 12 est engagé suivant l'axe X-X' dans deux ouvertures 14 visibles sur la figure 3 réalisées sur deux parois latérales opposées du manchon 13.

Le support 12 est constitué par un bloc de forme générale parallélépipédique.

Les deux ouvertures 14 du manchon 13 présentent une forme rectangulaire correspondant à la section transversale du bloc parallélépipédique de façon à verrouiller ce dernier par rapport au manchon 13.

La fixation du support 12 par rapport au manchon 13 est complétée par des cordons de soudure.

Les figures 3 et 4 montrent que le support 12 comporte un évidement intérieur 15 dans lequel est engagé de façon amovible un embout 16 solidaire de l'extrémité du bras 3 opposée à celle portant la rotule 4.

L'évidement 15 est centré sur le milieu de chacune des deux ouvertures 14 du manchon 13.

La référence 17 désigne un bouchon qui est fixé sur l'extrémité de l'embout 16 engagé dans l'évidement intérieur 15 du support 12.

L'embout 16 est rendu solidaire du support 12 grâce à la partie 16a verrouillée dans une échancrure 12a du support.

Le bras 3 portant la rotule 4 peut être monté et démonté du support 12, sans outil, par translation de l'embout 16 suivant l'axe X-X'.

Etant donné que le support 12 est intégré dans la zone du milieu de la traverse 10, c'est-à-dire entre les deux demi-traverses 10a, 10b, l'axe X-X' de montage et démontage du bras 3 n'est pas décalé par rapport à la traverse 10 mais passe par le milieu de celle-ci.

Cette disposition apporte les avantages suivants.

Le support 12 n'encombre pas l'espace situé à l'arrière du milieu de la traverse 10 et de ce fait, celle-ci peut être disposée (voir figure 4) très près du bord inférieur 6a du pare-choc arrière 6, sans qu'il soit nécessaire de réaliser une découpe dans le pare-choc 6 pour loger le support 12.

Par ailleurs, le manchon 13 qui assure la jonction entre les deux demi-traverses 10a, 10b et en même temps constitue le logement du support 12, permet d'obtenir une traverse 10 extrêmement rigide, résistant aux efforts de traction, de flexion et de torsion exercés sur le dispositif d'attelage.

Etant donné que l'axe X-X' de liaison entre le support 12 et le bras 3 est situé dans la zone du milieu de la traverse 10 et non pas décalé par rapport à celle-ci, cette zone du milieu de la traverse 10 encaisse mieux les efforts exercés et transmet ceux-ci vers la caisse du véhicule dans de meilleures conditions.

De plus, grâce au renforcement central de la traverse 10 réalisé par le manchon 13, la section transversale des demi-traverses 10a, 10b peut être réduite, ce qui permet d'alléger la masse et le coût de fabrication de l'ensemble du dispositif d'attelage.

## Revendications

1. Dispositif d'attelage pour véhicule automobile comprenant une traverse (10) dont les extrémités opposées comportent chacune des moyens de fixation (2) destinés à être fixés à la partie inférieure (11) de la face arrière de la caisse du véhicule, un bras (3) portant la rotule (4) du dispositif d'attelage, l'extrémité de ce bras (3) opposée à la rotule (4) étant reliée par des moyens de liaison à un support (12) qui est fixé au milieu de la traverse, lesdits moyens de liaison permettant de monter et de démonter ledit bras (3) par rapport audit support (12), suivant un axe (X-X') qui est sensiblement vertical, lorsque le dispositif d'attelage est fixé au véhicule, ledit support (12) étant intégré dans la zone du milieu de la traverse (10) et lesdits moyens de liaison étant agencés de telle sorte que ledit axe (X-X') traverse cette zone du milieu de la traverse (10), la traverse (10) étant constituée par deux demi-traverses (10a, 10b), ledit support (12) étant fixé entre ces deux demi-traverses (10a, 10b) et dans un manchon (13) de telle sorte que ledit axe (X-X') de montage et démontage du bras (3) portant la rotule (4) soit perpendiculaire à l'axe dudit manchon (13), chacune des deux extrémités opposées (13a, 13b) de ce manchon (13) étant liée axialement à l'une des deux demi-traverses (10a, 10b), **caractérisé en ce que** ledit support (12) est engagé dans deux ouvertures (14) réalisées sur deux parois latérales opposées du manchon (13).

2. Dispositif d'attelage selon la revendication 1, **caractérisé en ce que** l'extrémité de chacune des deux demi-traverses (10a, 10b) est engagée axialement dans l'une des extrémités (13a, 13b) dudit manchon (13) et est soudée à cette dernière.

3. Dispositif d'attelage selon la revendication 1 ou 2, **caractérisé en ce que** le support (12) est constitué par un bloc de forme générale parallélépipédique, les deux ouvertures (14) du manchon (13) présentant une forme rectangulaire correspondant à la section transversale dudit bloc de façon à verrouiller ce dernier par rapport au manchon (13).

4. Dispositif d'attelage selon l'une des revendications 1 à 3, **caractérisé en ce que** ledit support (12) comporte un évidement intérieur (15) dans lequel est engagé de façon amovible un embout (16) solidaire de l'extrémité du bras (3) opposée à celle portant la rotule (4).

5. Dispositif d'attelage selon les revendications 3 et 4, **caractérisé en ce que** l'axe dudit évidement (15) est centré sur le milieu de chacune desdites ouvertures (14).

6. Véhicule automobile équipé d'un dispositif d'attelage selon l'une des revendications 1 à 5.

7. Véhicule automobile selon la revendication 6, **caractérisé en ce que** le bras portant la rotule du dispositif d'attelage s'étend sous le pare-choc arrière (6), la traverse (10) du dispositif d'attelage s'étendant à proximité du bord inférieur (6a) du pare-choc (6) et ce bord inférieur (6a) étant dépourvu de découpe.

## Patentansprüche

1. Kupplungsvorrichtung für Kraftfahrzeug, die einen Querträger (10) umfasst, dessen entgegengesetzte Enden jeweils Befestigungsmittel (2) umfassen, die dazu bestimmt sind, an dem unteren Teil (11) der Rückseite der Fahrzeugkarosserie befestigt zu werden, einen Arm (3), der das Gelenk (4) der Kupplungsvorrichtung trägt, wobei das Ende dieses Arms (3), das dem Gelenk (4) entgegengesetzt ist, durch Verbindungsmittel mit einem Träger (12) verbunden ist, der in der Mitte des Querträgers befestigt ist, wobei es die Verbindungsmittel erlauben, den Arm (3) in Bezug auf den Träger (12) entlang einer Achse (X-X'), die im Wesentlichen vertikal ist, zu montieren und demontieren, wenn die Kupplungsvorrichtung an dem Fahrzeug befestigt ist, wobei der Träger (12) in die Zone der Mitte des Querträgers (10) integriert ist und die Verbindungsmittel derart eingerichtet sind, dass die Achse (X-X') diese Zone der Mitte des Querträgers (10) durchquert, wobei der Querträger (10) aus zwei halben Querträgern (10a, 10b) gebildet ist, wobei der Träger (12) zwischen diesen zwei halben Querträgern (10a, 10b) und in einer Hülse (13) derart befestigt ist, dass die Montage- und Demontageachse (X-X') des Arms (3), der das Gelenk (4) trägt, zu der Achse der Hülse (13) senkrecht ist, wobei jedes der zwei entgegengesetzten Enden (13a, 13b) dieser Hülse (13) axial mit einem der halben Querträger (10a, 10b) verbunden ist, **dadurch gekennzeichnet, dass** der Träger (12) in zwei Öffnungen (14) eingefügt ist, die auf zwei entgegengesetzten seitlichen Wänden der Hülse (13) hergestellt sind.

2. Kupplungsvorrichtung nach Anspruch 1, **dadurch gekennzeichnet, dass** das Ende jedes der zwei halben Querträger (10a, 10b) axial in eines der Enden (13a, 13b) der Hülse (13) eingefügt und an diese Letztere geschweißt ist.

3. Kupplungsvorrichtung nach Anspruch 1 oder 2, **dadurch gekennzeichnet, dass** der Träger (12) aus einem Block in allgemein parallelepipedischer Form besteht, wobei die zwei Öffnungen (14) der Hülse (13) eine Rechteckform aufweisen, die dem Querschnitt des Blocks derart entspricht, dass dieser Letztere in Bezug auf die Hülse (13) verriegelt ist.

4. Kupplungsvorrichtung nach einem der Ansprüche 1 bis 3, **dadurch gekennzeichnet, dass** der Träger (12) eine innere Aussparung (15) umfasst, in die abnehmbar ein Ansatz (16), der fest mit dem Ende des Arms (3), der dem, der das Gelenk (4) trägt, entgegengesetzt ist, eingefügt ist.

5. Kupplungsvorrichtung nach den Ansprüchen 3 und 4, **dadurch gekennzeichnet, dass** die Achse der Aussparung (15) auf die Mitte jeder der Öffnungen (14) zentriert ist.

6. Kraftfahrzeug, das mit einer Kupplungsvorrichtung nach einem der Ansprüche 1 bis 5 ausgestattet ist.

7. Kraftfahrzeug nach Anspruch 6, **dadurch gekennzeichnet, dass** sich der Arm, der das Gelenk der Kupplungsvorrichtung trägt, unter dem hinteren Stoßfänger (6) erstreckt, wobei sich der Querträger (10) der Kupplungsvorrichtung in der Nähe des unteren Rands (6a) des Stoßfängers (6) erstreckt, und dass dieser untere Rand (6a) keinen Ausschnitt aufweist.

## Claims

1. A hitch device for a motor vehicle comprising a cross member (10), the opposite ends of which each comprise fixing means (2) intended to be fixed to the lower part (11) of the rear face of the body shell of the vehicle, an arm (3) bearing the ball (4) of the hitch device, the opposite end of this arm (3) to the ball (4) being connected by connecting means to a mount (12) which is fixed to the middle of the cross member, said connecting means allowing said arm (3) to be mounted on and removed from said mount (12) along an axis (X-X') which is substantially vertical when the hitch device is fixed to the vehicle, said support (12) being incorporated into the middle region of the cross member (10) and said connecting means being arranged in such a way that said axis (X-X') passes through this middle region of the cross member (10), the cross-member (10) being constituted by two half cross members (10a, 10b), said mount (12) being fixed between these two half cross members (10a, 10b) and in a sleeve (13) such that said axis (X-X') for mounting and dismantling of the arm (3) bearing the ball (4) is perpendicular to the axis of said sleeve (13), each of the two opposite ends (13a, 13b) of this sleeve (13) being connected axially to one of the two half cross members (10a, 10b), **characterized in that** said mount (12) is engaged in two openings (14) formed on two opposite lateral walls of the sleeve (13).

2. The hitch device according to Claim 1, **characterized in that** the end of each of the two half cross members (10a, 10b) is engaged axially in one of the ends (13a, 13b) of said sleeve (13) and is welded to the latter.

3. The hitch device according to Claim 1 or 2, **characterized in that** the mount (12) is constituted by a block of generally parallelepipedic shape, the two openings (14) of the sleeve (13) having a rectangular shape corresponding to the cross section of said block so as to lock the latter with respect to the sleeve (13).

4. The hitch device according to one of Claims 1 to 3, **characterized in that** said mount (12) comprises an interior recess (15) in which there is engaged in a removable manner an end piece (16) integral with the end of the arm (3) opposite to that bearing the ball (4).

5. The hitch device according to Claims 3 and 4, **characterized in that** the axis of said recess (15) is centred on the middle of each of said openings (14).

6. A motor vehicle equipped with a hitch device according to one of Claims 1 to 5.

7. The motor vehicle according to Claim 6, **characterized in that** the arm bearing the ball of the hitch device extends beneath the rear bumper (6), the cross member (10) of the hitch device extending close to the lower edge (6a) of the bumper (6) and this lower edge (6a) being without a cut-out.
